# EUROPEAN PATENT SPECIFICATION

(11) **EP 3 009 292 B1**
(45) Date of publication and mention of the grant of the patent: **26.06.2019**
(21) Application number: 15169366.0
(22) Date of filing: 27.05.2015
(51) Int. Cl.: B60K 15/00, B60K 15/04, B65D 1/46

(54) **FUEL TANK FILLER NECK**
KRAFTSTOFFTANKEINFÜLLSTUTZEN
TUBULURE DE REMPLISSAGE DE RÉSERVOIR DE CARBURANT

(30) Priority: 15.10.2014 TR 201412111 U; 20.11.2014 TR 201413730
(43) Date of publication of application: 20.04.2016
(73) Proprietor: Floteks Plastik Sanayi Ve Ticaret Anonim Sirketi, Bursa (TR)
(72) Inventor: Beysel, Veysel Celal, Bursa (TR)
(74) Representative: Kaya, Erdem

(56) References cited:
- DE-A1- 3 623 226
- DE-U1- 9 104 640
- GB-A- 437 395
- JP-B2- 3 759 981
- US-A- 4 867 337

## Description

### TECHNICAL FIELD

The present invention relates to a filler neck embodiment where the fuel pump is placed and which forms the inlet section of the fuel tank in fuel tanks made of plastic.

### PRIOR ART

Fuel tanks are closed tank embodiments where the fuel is preserved at appropriate conditions and where motor is fed. The fuel tanks existing in the automotive sector are made of metals like steel or aluminum or made of plastic. A filler neck showing the features of the preamble of claim 1 is known from JP 3 759981 B2.

In general, fuel tanks comprise a chamber wherein fuel is filled, an outlet section where fuel is fed to the motor, and a filler neck where fuel is fed to the tank. The filler neck is delimited by means of a cover, and a gap section where the gun of the fuel pump is placed. In fuel tanks which are made of plastic, the filler neck extends towards the tank. Inside the filler neck, there is a threaded part and a filter. The threaded part and the filter are made of metal. The filter is provided at the end of the filler neck. The filler neck is covered by the cover, and it is isolated from the outer medium. When fuel is to be filled into the tank, the cover is opened, and the gun of the fuel pump is placed from the filler neck towards the tank chamber.

In the production of the plastic fuel tank, inflation and rotation methods are utilized. The subject matter is a fuel tank which is produced by means of plastic rotation technology. The chamber section of the tank is produced from plastic material by means of rotation. After production, the sections like the metal threaded part, filter, cover, etc. are assembled to the chamber, and the production of the fuel tank is completed. During production of the chamber by means of the rotation method, a porous structure may be formed in the region where the threaded part is to be assembled afterwards. This affects the sealing property in a negative manner. Moreover, during the assembly of the threaded part to the chamber housing, deformations and damages may occur in the chamber. Besides, due to the vibrations occurring in the vehicle and moreover due to the torque applied onto the threaded part as a result of opening and closing of the cover in each fuel filling process, the threaded part may accidentally get removed from the housing provided on the neck which is the extension of the chamber together with the cover placed onto the threaded part.

During assembly of the threaded part to the chamber, o-ring is used for providing sealing. O-ring usage increases production costs. Moreover, each extra assembly step realized in the production of the fuel tank increases both the production cost and the production duration.

As a result, because of all of the abovementioned problems, an improvement is required in the related technical field.

### BRIEF DESCRIPTION OF THE INVENTION

The present invention relates to a filler neck comprising an embedded part and provided in the fuel tank, for eliminating the above mentioned disadvantages and for bringing new advantages to the related technical field.

The main object of the present invention is to provide a filler neck which improves the sealing property of the fuel tank during production by means of the rotation method.

Another object of the present invention is to provide a filler neck which is resistant to the continuous vibrations to which the fuel tank is subjected.

Another object of the present invention is to provide a filler neck which decreases the assembly and production costs of the fuel tank and which accelerates the production process.

In order to realize all of the abovementioned objects and the objects which are to be deducted from the detailed description below, the present invention is a filler neck comprising a front section encircled and covered by the fuel tank cover and which is embodied so as to encircle a metal embedded part by means of plastic, said metal embedded part comprising a threaded body and provided at the continuation of said front section. Accordingly, said filler neck is characterized in that said embedded part comprises a body base embodied in an inwardly curved form and placed on the filter at the continuation of said threaded body.

In a preferred embodiment of the subject matter invention, there is at least one chain hole at the section of the curved body base embodied in ring form and where the chain, whose one end is connected on the cover, is connected to the metal embedded part at the bottom. Thus, the removal and falling of the cover from the tank are prevented.

In another preferred embodiment of the subject matter invention, there are reinforcing holes embodied in a peripheral manner on said front section. Thus, the plastic is filled in the front section during production, and it is prevented from being separated from the plastic body, and at the same time, and the rotation and/or loosening of the metal section is/are prevented by resisting against the torque power formed during the tightening of the cover.

In another preferred embodiment of the subject matter invention, the body neck is embodied at a neck slope angle which forms an embedded part outer diameter which corresponds to the inner diameter of the edge.

In another preferred embodiment of the subject matter invention, it is embodied so as to define a front section height which is at least longer than the cover edge height.

In another preferred embodiment of the subject matter invention, the threaded body is embodied at a height providing formation of the bridge section at the vicinity of the body neck such that no gap remains in between.

In another preferred embodiment of the subject matter invention, the threaded body is embodied so as to define a chain placement height which is compliant to the volume of placement of the chain into the threaded body.

### BRIEF DESCRIPTION OF THE FIGURES

In Figure 1, a general view of the fuel tank is given.
In Figure 2a and 2b, the general view of the embedded part is given.

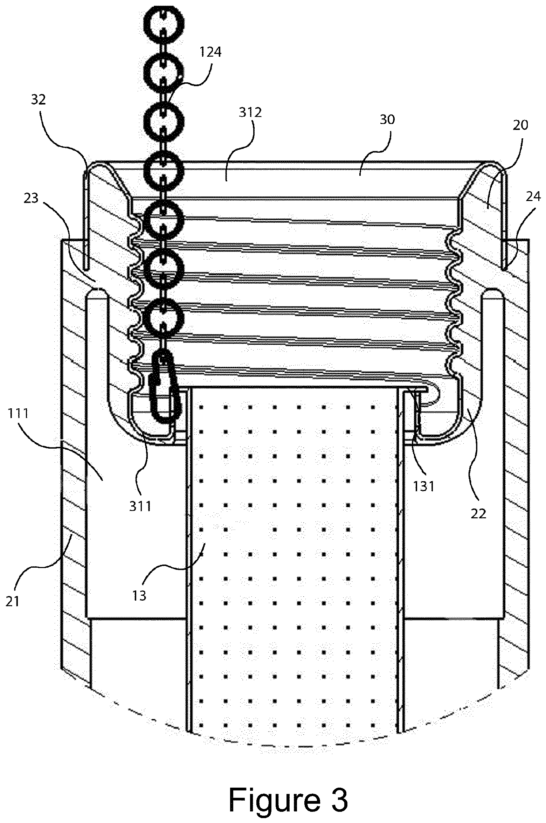

In Figure 3, a cross sectional view of the filler neck is given.

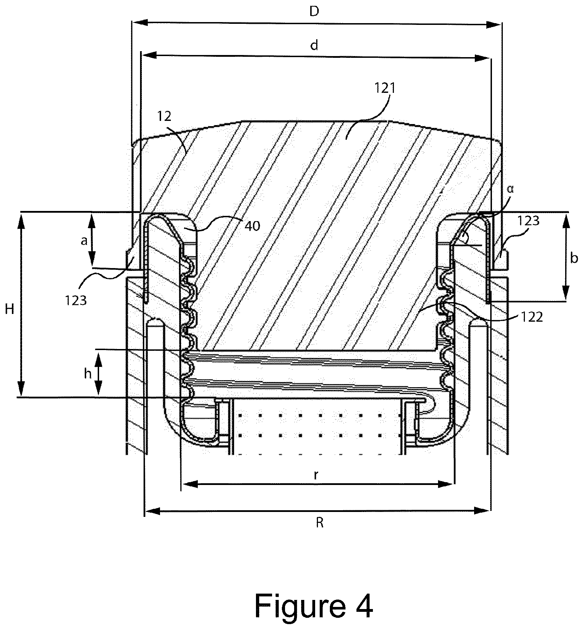

In Figure 4, another cross sectional view of the filler neck is given.

### REFERENCE NUMBERS

10 Fuel Tank
   11 Filler Neck
      111 Gap Section
   12 Cover
      121 Handle
      122 Body
      123 Edge Section
      124 Chain
   13 Filter
      131 Seating Plate
20 Housing Section
   21 Lateral Wall
   22 Chamber
   23 Bridge Section
   24 Peripheral Channel
30 Embedded Part
   31 Threaded Body
      311 Body Base
      312 Body Neck
   32 Front Section
      321 Reinforcing Hole
   33 Ring Section
      331 Chain Hole
40 Sealing Element
a: Edge Height
b: Front Height
h: Chain Placement Height
H: Threaded Body Length
R: Embedded Part Outer Diameter
r: Embedded Part Inner Diameter
D: Cover Outer Diameter
d: Edge Inner Diameter
α: Neck Slope Angle

### THE DETAILED DESCRIPTION OF THE INVENTION

In this detailed description, the subject matter fuel tank filler neck (11) comprising embedded part (30) is explained with references to examples without forming any restrictive effect only in order to make the subject more understandable.

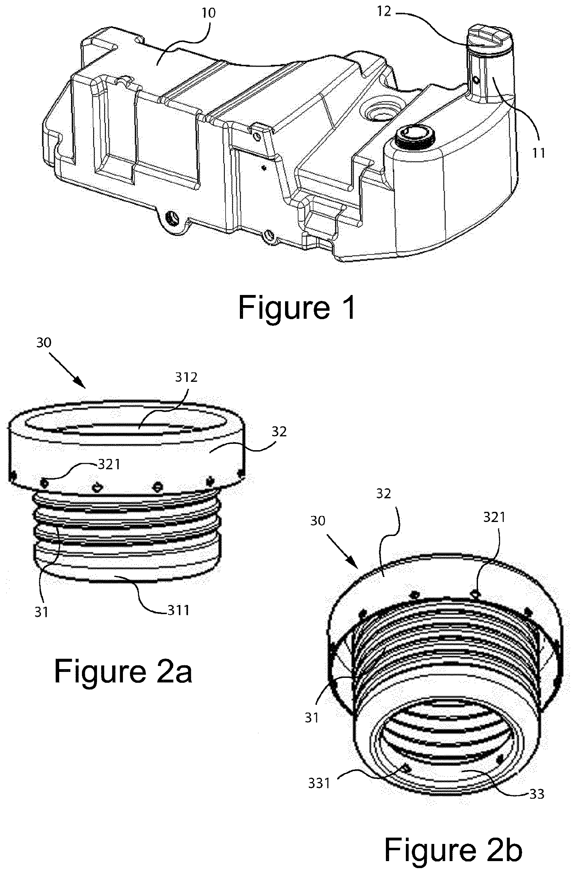

The fuel tank (10), whose general view is given in Figure 1, essentially comprises a filler neck (11) where the fuel pump is placed, and a cover (12) which covers said filler neck (11). The filler neck (11) comprises a gap section (111) defined so as to extend to the fuel tank (10). The filler neck (11) is defined by a housing section (20) and an embedded part (30) which is embedded into said housing section (20). At the continuation of said embedded part (30), there is a filter (13) extending inside the housing section (20). There is a sealing element (40) between said cover (12) and said embedded part (30).

The cover (12) comprises a body (122) whereon threads are embodied, and a handle (121) embodied at the continuation of said body (122). There is peripheral edge section (123) extending so as to define an edge height (a) downwards said handle (121). Moreover, the cover (12) comprises a chain (124) whose one end is connected to the embedded part (30). The embedded part (30) comprises a threaded body (31). The lower end of the threaded body (31) defines a curved body base (311), and the upper end thereof defines a body neck (312). A ring section (33) is embodied at the continuation of said body base (311). At the continuation of said body neck (312), a front section (32) is embodied having a front height (b) which is longer than the edge height (a). Reinforcing holes (321) are embodied along the periphery of said front section (32). On said ring section (33), chain holes (331) are embodied connected to said chain (124). The upper end of said filter (13) is embodied so as to define a circularly formed seating plate (131). The filter (13) is positioned inside said embedded part (30) such that said seating plate (131) is placed on the ring section (33).

The housing section (20) is obtained by means of the rotation method so as to encircle and fill the outer periphery of the embedded part (30). The housing section (20) comprises a circular lateral wall (21) so as to define the outer walls of the filler neck (11), and a chamber (22) which encircles the threaded body (31) of the embedded part (30). Said lateral wall (21) and the chamber (22) are connected by means of a peripheral bridge section (23) formed as a result of the rotation process. Moreover, in the housing section (20), there is a peripheral channel (24) formed naturally by means of placement of the front section (32) between the chamber (22) and the lateral wall (21).

In the production of the embedded part (30), the outer diameter (R) of the embedded part is determined by taking the inner diameter (d) of the edge into account so as to provide maximum sealing. The covers (12) used in fuel tanks (10) are in standard dimensions, and thus, the cover outer diameter (D), the edge inner diameter (d) and all body dimensions are determined. The inner diameter (r) of the embedded part is determined by taking into consideration the diameter of the cover body (122). In the determination of the maximum value of the embedded part outer diameter (R), the reference value is the edge inner diameter (d). The front section (32) is embodied in an embedded part outer diameter (R) which is determined so as to peripherally contact the inner surface of the edge section (123). The embodiment of the embedded part outer diameter (R) in the desired value is provided by defining a neck slope angle (α) of the body neck (312) extending from the threaded body (31) to the front section (32). As the value of said neck slope angle (α) is reduced, the overlapping between the front section (32) and the edge section (123) will increase, and thus, firmer sealing can be provided.

During production of the embedded part (30), the cover (12) dimensions bear importance in the determination of the front height (b). The front height (b) is determined as a longer value when compared with the edge height (a). In case the edge height (a) is shorter than the front height (b), the cover (12) contacts and seats on the housing section (20). Moreover, in this case, the sealing element (40), placed between the embedded part (30) and the cover (12), remains in a gap. In such a case, sealing function cannot be sufficiently provided.

Another dimension, regarding the embedded part (30) which has to be determined by taking into consideration the cover (12) dimensions, is the chain placement height (h). The chain (124), which is connected to the cover (12) from one end and which is connected to the ring section (33) from the other end, is sagged into the embedded part (30) in case the cover (12) is closed. In case the cover (12) is closed, the chain (124) is positioned inside the embedded part (30) by means of being placed on the filter (13). Thus, the distance, existing between the seating plate (131) of the filter (13) and the cover body (122) and defined as the chain placement height (h), bears importance. The chain placement height (h) shall be selected so as not to prevent closing of the cover (12) even at the maximum volume of the chain (124). In case the chain placement height (h) is greater than the required height, the threaded body length (H) shall be increased. Therefore, the chain placement height (h) is embodied by taking into consideration the maximum volume of the chain (124) and the optimum body length (H).

During the rotation method, the gap existing between threaded body (31), the body neck (312) and the front section (32) is filled with plastic material. Said bridge section (23) is formed naturally by means of the material filled between the threaded body (31) and the front section (32). In cases where the length of the threaded body (31) is increased, the bridge section (23) is formed at the lower regions of the filler neck (11). Due to this, a gapped region, which does not comprise plastic material, is formed at the vicinity of the body neck (312). This gapped region affects the resistance of the structure and the sealing property in a negative manner. Thus, while the length of the threaded body (31) is determined, a bridge section (23) is desired to be formed which will define a non-gapped structure between the threaded body (31), the body neck (312) and the front section (32).

In the subject matter filler neck, the embedded part (30) is placed to the mold during the production of the fuel tank (10) by means of the rotation method, and it is embedded to the filler neck (11). The housing section (20) encircles the embedded part (30) during the rotation process, and it is formed so as to be compliant to the form of the embedded part (30). In order to provide firmer holding between the outer surface of the embedded part (30) and the housing section (20), the outer surface area of the embedded part (30) is increased by means of the sanding method. Moreover, as the plastic material is filled into the reinforcing holes (321) during the rotation method, the mechanical holding of the embedded part (30) is increased.

During the rotation process, the chain hole (331) shall be prevented from being filled with plastic material. Otherwise, the chain hole (331) shall be punched again by means of the punching process, and this may lead to burr formation during the process. Burr formation is not desired since it will lead to blocking and failures in the motor region. Therefore, a teflon coated cylinder is placed into the gap section (111) during the rotation process. The teflon coated cylinder blocks the chain holes (331). Since the plastic material does not adhere to the teflon surface, the chain holes (331) remain in open form, without the need for an additional process, as the teflon coated cylinder is removed from the gap section (111) after the rotation process.

By means of said invention, there remains no need for the additional assembly of the embedded part (30) into the filler neck (11). This accelerates the production process, and reduces the production costs. The repetitive vibrations, to which the fuel tank (10) is subjected during the fuel filling processes and during the usage of the vehicle, lead to a lighter negative effect since the embedded part (30) is embedded into the housing section (20). Moreover, the outer surface of the embedded part (30) can be completely covered with plastic material without forming a porous structure. By means of this, the sealing property of the filler neck (11) is improved without the need for an additional sealing element.

## Claims

1. A filler neck (11) for a fuel tank comprising a front section (32) encircled and covered by the fuel tank (10) cover (12) and which is embodied so as to encircle a metal embedded part (30) by means of plastic, said metal embedded part (30) comprising a threaded body (31) and provided at the continuation of said front section (32); wherein said embedded part (30) comprises a body base (311) embodied in an inwardly curved form at the continuation of said threaded body (31), **characterized in that** said filler neck comprises a ring section (33) extending from said body base (311) into the threaded body (31).

2. A filler neck (11) according to Claim 1, **characterized by** comprising at least one chain hole (331) embodied at the section of the curved body base embodied in ring form and where the chain (124), whose one end is connected on the cover (12), is connected by means of the ring section (33) from the other end.

3. A filler neck (11) according to Claim 1, **characterized by** comprising reinforcing holes (321) embodied in a peripheral manner on said front section (32).

4. A filler neck (11) according to any one of the preceding claims, **characterized in that** there is a peripheral edge section (123) extending so as to define an edge height (a) downwards said handle (121) and **in that** the body neck (312) is embodied at a neck slope angle (α) which forms an embedded part outer diameter (R) which corresponds to the edge section inner diameter (d).

5. A filler neck (11) according to Claim 1, **characterized in that** it is embodied so as to define a front height (b) which is at least longer than the edge section height (a) of the cover (12).

6. A filler neck (11) according to Claim 1, **characterized in that** the threaded body (31) is embodied at a threaded body length (H) providing formation of a bridge section (23) at the vicinity of the body neck (312) such that no gap remains in between.

7. A filler neck (11) according to Claim 2, **characterized in that** the threaded body (31) is embodied so as not to prevent closing of the cover (12) even at the maximum volume of the chain (124) when the chain (124) is placed in to the threaded body (31).

## Patentansprüche

1. Ein Einfüllstutzen (11) für ein Kraftstofftank, der ein Vorderteil (32) umfasst, das von der Abdeckung (12) des Kraftstofftanks (10) abgegrenzt und abgedeckt ist und das so ausgebildet ist, dass es ein eingebettetes Stück aus Metall (30) mithilfe von Kunststoff umgibt, wobei das eingebettete Stück aus Metall (30) einen Gewindekörper (31) aufweist und an der Fortsetzung des Vorderteils (32) vorgesehen ist; wobei das eingebettete Stück (30) eine Körperbasis (311) umfasst, die in einer nach innen gewölbten Form an der Fortsetzung des Gewindekörpers (31) ausgebildet ist, **dadurch gekennzeichnet, dass** der Einfüllstutzen einen Ringabschnitt (33) umfasst, der sich von der Körperbasis in den Gewindekörper (31) hinein erstreckt (311).

2. Ein Einfüllstutzen (11) nach Anspruch 1, **dadurch gekennzeichnet, dass** er mindestens ein Kettenloch (331) umfasst, das im Abschnitt der ringförmig ausgebildeten gewölbten Körperbasis ausgebildet ist und woran die Kette (124), dessen eine Ende mit der Abdeckung (12) verbunden ist, mittels des Ringabschnittes (33) mit dem anderen Ende angeschlossen ist.

3. Ein Einfüllstutzen (11) nach Anspruch 1, **dadurch gekennzeichnet, dass** er Verstärkungslöcher (321) umfasst, die am Vorderteil (32) um dessen Umfang herum vorgesehen sind.

4. Ein Einfüllstutzen (11) nach einem der vorangehenden Ansprüche, **dadurch gekennzeichnet, dass** ein umlaufender Randabschnitt (123) vorgesehen ist, der sich so erstreckt, dass er von einem Griff (121) nach unten hin eine Randhöhe (a) abgrenzt, und dass der Körperstutzen (312) mit einem solchen Stutzen-Neigungswinkel (a) ausgestaltet ist, dass sich für das eingebettete Stück ein Außendurchmesser (R) ergibt, der dem Innendurchmesser (d) des Randabschnitts entspricht.

5. Ein Einfüllstutzen (11) nach Anspruch 1, **dadurch gekennzeichnet, dass** er so ausgebildet ist, dass er eine Fronthöhe (b) definiert, die mindestens länger ist als die Randabschnittshöhe (a) der Abdeckung (12).

6. Ein Einfüllstutzen (11) nach Anspruch 1, **dadurch gekennzeichnet, dass** der Gewindekörper (31) mit einer solchen Gewindekörperlänge (H) ausgebildet ist, die eine Ausbildung eines Brückenabschnitts (23) in der Nähe des Körperstutzens (312) ermöglicht, und zwar so, dass keine Lücke dazwischen bleibt.

7. Ein Einfüllstutzen (11) nach Anspruch 2, **dadurch gekennzeichnet, dass** der Gewindekörper (31) so ausgebildet ist, dass ein Schließen der Abdeckung (12) auch bei maximalem Volumen der Kette (124) nicht verhindert wird, wenn die Kette (124) in den Gewindekörper (31) eingeführt wird.

## Revendications

1. Un goulot de remplissage (11) pour réservoir de carburant comprenant une partie avant (32) entourée et recouverte par le couvercle (12) du réservoir de carburant (10) et qui est réalisée de manière à entourer une pièce en métal encastrée (30) au moyen d'une matière en plastique, ladite pièce en métal incorporée (30) comprenant un corps fileté (31) et installée au prolongement de ladite partie avant (32); dans lequel ladite partie incorporée (30) comprend une base de corps (311) réalisée sous une forme incurvée vers l'intérieur au prolongement dudit corps fileté (31), **caractérisé en ce que** ledit goulot de remplissage qui comprend une section d'anneau (33) s'étendant depuis ladite base de corps (311) dans le corps fileté (31).

2. Selon la revendication 1, un goulot de remplissage (11), **caractérisé en ce qu'**il comprend au moins un trou de chaîne (331) réalisé dans la section de la base du corps incurvée en forme d'anneau (124) dont un bout est relié sur le couvercle (12), est relié au moyen de la section d'anneau (33) à partir de l'autre extrémité.

3. Selon la Revendication 1, un goulot de remplissage (11), **caractérisé en ce qu'**il comprend des trous de renforcement (321) réalisés de manière périphérique sur ladite partie avant (32).

4. Selon l'une des revendications précédentes quelconque, un goulot de remplissage (11), **caractérisé en ce qu'**il existe une partie de bord périphérique (123) s'étendant de manière à définir une hauteur de bord (a) vers le bas dudit manche (121) et **en ce que** le corps de col (312) est formé a un angle d'inclinaison du col (a) qui forme un diamètre extérieur de la partie incorporée (R) qui correspond au diamètre intérieur de la partie de bord (d).

5. Selon la Revendication 1, un goulot de remplissage (11), **caractérisé en ce qu'**il est conçu pour définir une hauteur frontale (b) qui est au moins plus longue que la hauteur de la partie de bord (a) du couvercle (12).

6. Selon la revendication 1, un goulot de remplissage (11) **caractérisé en ce que** le corps fileté (31) est réalisé à une longueur de corps fileté (H) fournissant la formation d'un tronçon de pont (23) au voisinage du goulot de corps (312) de sorte qu'aucun écart ne reste entre eux.

7. Selon la Revendication 2, un goulot de remplissage (11), **caractérisé en ce que** le corps fileté (31) est réalisé de sorte à ne pas empêcher la fermeture du couvercle (12) même au maximum volume de la chaîne (124) lorsque la chaîne (124) est placée dans le corps fileté (31).
